# EUROPÄISCHE PATENTSCHRIFT

(11) **EP 0 347 787 B1**
(45) Veröffentlichungstag und Bekanntmachung des Hinweises auf die Patenterteilung: **07.12.1994**
(21) Anmeldenummer: 89111059.5
(22) Anmeldetag: 19.06.1989
(51) Int. Cl.: H01H 71/00, H02H 3/02

(54) **Schutzschalter gegen Überstrom und Kurzschluss**
Protective circuit breaker for an overload current and short circuit
Disjoncteur de protection pour courant de surcharge et court-circuit

(30) Priorität: 22.06.1988 DE 3820993
(43) Veröffentlichungstag der Anmeldung: 27.12.1989
(73) Patentinhaber: HAGER ELECTRO GmbH, D-66131 Saarbrücken (DE)
(72) Erfinder: Kelaiditis, Konstantin, Dr. Dipl.-Ing., D-6670 St. Ingbert (DE)
(74) Vertreter: Bernhardt, Winfrid, Dr.-Ing.

(56) Entgegenhaltungen:
- EP-A- 0 023 277
- DE-A- 3 316 230

## Beschreibung

Die Erfindung betrifft einen Schutzschalter gegen Überstrom und Kurzschluß, der gegenüber gegebenenfalls nachgeschalteten Schutzeinrichtungen gegen Überstrom und Kurzschluß selektiv ist und der einen Hauptstromweg aufweist, der mittels eines auf Kurzschluß ansprechenden, schnelleren Bewegungsmechanismus' sowie mittels eines auf Überstrom ansprechenden, langsameren Bewegungsmechanismus' trennbar ist, wobei die von dem auf Kurzschluß ansprechenden Bewegungsmechanismus betätigte Trennstelle des Hauptstromweges überbrückt ist durch einen Nebenstromweg mit einem elektrischen Widerstand und einer zweiten Trennstelle in Reihe, die durch den genannten und/oder einen weiteren langsameren Bewegungsmechanismus zu öffnen ist, und eine Einrichtung zum Schließen der erstgenannten Trennstelle bei Wegfall des kurzschlusses vor dem öffnen der zweiten Trennstelle vorgesehen ist, die einen in Energieflußrichtung hinter der zweiten Trennstelle und hinter dem Widerstand von dem Nebenstromweg abzweigenden weiteren Stromweg umfaßt, der zum Nulleiter führt und die Auslösung der Einrichtung zum Schließen der erstgenannten Trennstelle bildet, wobei insbesondere die Einrichtung im übrigen durch einen gleichfalls in dem weiteren Stromweg angeordneten, weiteren Bewegungsmechanismus gebildet ist.

Ein solcher Schutzschalter ist aus der DE-PS 33 16 230 bekannt. Er ist im einphasigen Einsatz uneingeschränkt arbeitsfähig.

Im dreiphasigen Einsatz besteht jedoch eine Schwierigkeit. Entsteht hier ein Kurzschluß nicht gegen Null, sondern gegen eine andere Phase, so öffnen zunächst die erstgenannten Trennstellen der beiden in den beteiligten Phasen angeordneten Schutzschalter. Anschließend sollen die zweiten Trennstellen öffnen, womit die Schutzschalter dann vollständig und endgültig abgeschaltet haben. Das geschieht jedoch nicht ohne weiteres gleichzeitig; die betreffenden beiden langsameren Bewegungsmechanismen müßten dafür gleich schnell sein. Es kann dazu kommen, daß nur der eine Leitungsschutzschalter vollständig abschaltet und, weil damit der Kurzschluß wegfällt, anschließend der andere Leitungsschutzschalter sogar wieder einschaltet. Ist dann nicht in dem weiteren Stromweg des ersteren Leitungsschutzschalters eine geöffnete dritte Trennstelle vorhanden, so würden weitere Wiedereinschaltungen der beiden Schutzschalter jeweils durch den vom anderen gelieferten Kurzschlußstrom folgen. Nach der genannten DE-PS 33 16 230 ist deshalb in dem weiteren Stromweg eine dritte Trennstelle vorgesehen in Koppelung der ersten Trennstelle derart, daß die dritte Trennstelle bei Öffnen der ersten schließt und umgekehrt und vorzugsweise unabhängig davon auch in Koppelung mit der zweiten Trennstelle derart, daß die dritte Trennstelle zusammen mit der zweiten öffnet und geschlossen wird. Ein späteres Wiedereinschalten des abgeschalteten Schutzschalters von Hand kann aber auch dann zu einer kurzzeitigen Wiederherstellung des Kurzschlußstromes führen.

Der Erfindung liegt die Aufgabe zugrunde, Störungen durch Beaufschlagung des Leitungsschutzschalters mit Spannung von der Ausgangsseite her, insbesondere bei zweiphasigem Kurzschluß, zu vermeiden.

Gemäß der Erfindung wird dieser Zweck bei einem Schutzschalter der eingangs genannten Art in der Weise erfüllt, daß in dem Nebenstromweg in Energieflußrichtung hinter der Abzweigung des weiteren Stromweges eine in Richtung auf diesen sperrende Diode angeordnet ist und in dem weiteren Stromweg eine von Null her in Richtung auf die die Auslösung bildenden Organe sperrende Diode angeordnet ist und diese Organe so ausgelegt sind, daß sie auf den dann bei Kurzschluß des Hauptstromweges mit einer anderen Phase noch möglichen Stromfluß in dem weiteren Stromweg nicht ansprechen.

Die genannte dritte Trennstelle kann bei dem neuen Schutzschalter im ganz abgeschalteten Zustand auch geschlossen bleiben und bedarf keiner Koppelung mit der zweiten Trennstelle.

Die Erfindung sei im folgenden anhand von Ausführungsbeispielen erläutert. In der zugehörigen Zeichnung zeigt
- Fig. 1: ein Schaltbild eines ersten Schutzschalters,
- Fig. 2: ein Schaltbild eines zweiten Schutzschalters,
- Fig. 3: ein Schaltbild eines dritten Schutzschalters und
- Fig. 4: den Spannungsverlauf in den Schutzschaltern im Falle eines zweiphasigen Kurzschlusses.

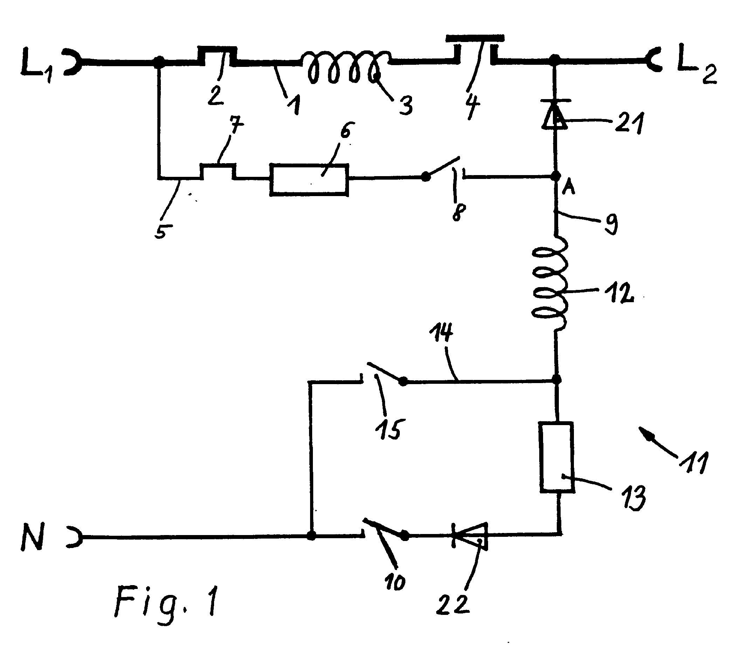

Der erfindungsgemäße Schutzschalter nach Fig. 1, 2 oder 3 ist für eine dreiphasige Leitung dreifach, beispielsweise in einem Verteilungssystem jeweils zwischen einem Vorsicherungselement, das gleichfalls ein Schutzschalter ist, und einer Gruppe von nachgeschalteten Schutzeinrichtungen (Leitungsschutzschaltern) angeordnet. Sowohl zu dem Vorsicherungselement als auch zu den nachgeschalteten Leitungsschutzschaltern soll der Schutzschalter selektiv sein.

Durch den Schutzschalter führt ein Hauptstromweg 1, in dem ein auf Überstrom ansprechender langsamerer Bewegungsmechanismus (thermischer Auslöser 2), ein auf Kurzschluß ansprechender schnellerer Bewegungsmechanismus (Magnetmechanismus 3) und eine von dem thermischen Auslöser 2 aus und von dem Magnetmechanismus 3 betätigte Trennstelle 4 angeordnet sind.

Der Magnetmechanismus 3 und die Trennstelle 4 sind überbrückt durch einen Nebenstromweg 5. In diesem sind ein ohmscher Widerstand 6 von beispielsweise 0,1 bis 5 oder auch bis zu 10 Ohm für Nennstromstärken von 6-100 A, ein weiterer langsamerer Bewegungsmechanismus (thermischer Auslöser 7) und eine zweite Trennstelle 8 angeordnet. Hinter den Trennstellen 4 und 8 zweigt ein weiterer Stromweg 9 zum Nulleiter ab. Er führt über eine dritte Trennstelle 10 und einen weiteren schnelleren Bewegungsmechanismus (Magnetmechanismus 11).

Der thermische Auslöser 2 wirkt über ein nicht gezeichnetes Schaltschloß auf die zweite Trennstelle 8. Diese ist mechanisch sowie über ein weiteres Schaltschloß mit der Trennstelle 4 derart gekoppelt, daß die Trennstelle 4 unabhängig von der zweiten Trennstelle 8 öffnen und schließen kann, aber bei Öffnen der zweiten Trennstelle 8 gleichfalls öffnet. Der weitere thermische Auslöser 7 wirkt ebenfalls über das erstgenannte Schaltschloß 16 auf die zweite Trennstelle 8.

Auch der Magnetmechanismus 3 wirkt mechanisch sowie über das weitere Schaltschloß auf die Trennstelle 4.

Der weitere Magnetmechanismus 11 wirkt auf die Trennstelle 4 mechanisch.

Die dritte Trennstelle 10 ist mit der Trennstelle 4 mechanisch so gekoppelt, daß die eine öffnet, wenn die andere schließt. Außerdem ist sie mit der zweiten Trennstelle 8 mechanisch derart gekoppelt, daß sie mit dieser öffnet und, bei Betätigen von Hand, geschlossen wird.

So weit ist der Schutzschalter aus der DE-PS 33 16 230 bekannt und in den drei Ausführungsbeispielen nach Fig. 1, 2 und 3 gleich. Seine grundsätzliche Funktion - die noch nicht erwähnten Elemente der Schaltung können dafür zunächst außer Betracht bleiben - ist folgende:

Tritt hinter dem Schutzschalter ein Kurzschluß ein, wird der Hauptstromweg 1 an der mittels des auf Kurzschluß ansprechenden, schnelleren Bewegungsmechanismus' (Magnetmechanismus 3) betätigten Trennstelle 4 getrennt. In dem diese Trennstelle 4 überbrückenden Nebenstromweg 5 fließt jedoch weiter ein, allerdings durch den Widerstand 6 verminderter, Strom. Spricht der nachgeschaltete Leitungsschutzschalter ebenfalls an, d.h. wird die Kurzschlußstelle abgetrennt, so steigt die Spannung am Eingang des weiteren Stromweges, dessen Trennstelle 10 durch das Öffnen der Trennstelle 4 geschlossen worden war, und der weitere Magnetmechanismus 11 wird als Einrichtung zum Schließen der erstgenannten Trennstelle (4) wirksam und stellt den Hauptstromweg wieder her. Liegt die Kurzschlußstelle vor dem nachgeschalteten Leitungsschutzschalter oder dauert der Kurzschluß aus anderem Grunde an, so bleibt die erstgenannte Trennstelle 4 geöffnet. Der unter diesen Umständen durch den Nebenstromweg 5 fließende erhöhte Strom läßt nun den weiteren langsameren Bewegungsmechanismus (thermischer Auslöser 7) die zweite Trennstelle 8 öffen und damit auch den Nebenstromweg 5 unterbrechen. Zugleich mit der zweiten Trennstelle 8 wird durch entsprechende mechanische Koppelung die dritte Trennstelle 10 geöffnet.

Der weitere Stromweg 9 erhält nun gleichfalls keinen Strom mehr. In gleicher Weise öffnet der thermische Auslösr 2 bei Überstrom die erstgenannte Trennstelle 4.

Zur Vergrößerung der Schließkraft des Magnetmechanismus' 11 sind in den Ausführungsbeispielen nach Fig. 1,2 und 3 verschiedene in der DE-OS 34 09 513 vorgeschlagene Maßnahmen getroffen:

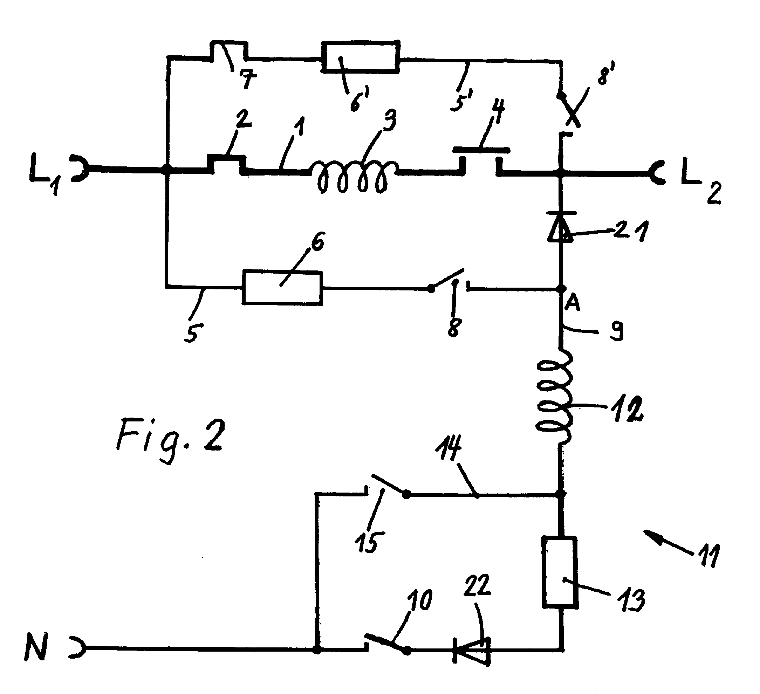

Bei dem Ausführungsbeispiel nach Fig. 1 und 2 ist der genannte weitere schnellere Bewegungsmechanismus mit einer bei Überschreiten eines Schwellwertes der Stromstärke einen Anker bewegenden Spule 12 und einem in Reihe mit der Spule 12 geschalteten Widerstand 13 sowie einer den Widerstand 13 überbrückenden Leitung 14 versehen, die einen Schaltkontakt 15 derart aufweist, daß er bei einem ersten Teil der Ankerbewegung geschlossen wird.

Ohne daß der Schwellwert davon beeinflußt wäre, steht dann sofort sehr viel mehr Energie zum Schließen der Trennstelle 4 zur Verfügung.

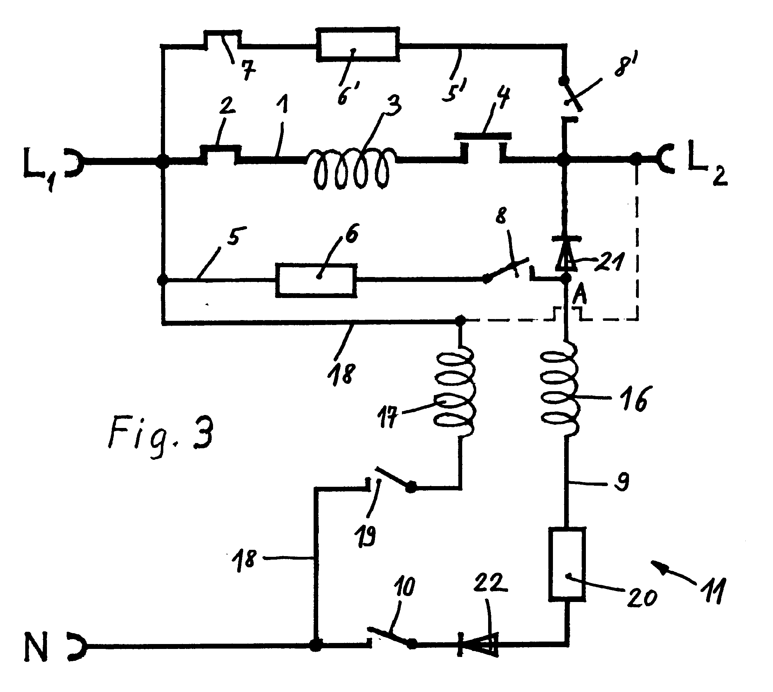

Bei dem Ausführungsbeispiel nach Fig. 3 ist der genannte weitere schnellere Bewegungsmechanismus mit einer bei Überschreiten eines Schwellwertes der Stromstärke einen Anker bewegenden Spule 16 und einer parallel zu dieser geschalteten, vorzugsweise konzentrisch mit ihr angeordneten, weiteren Spule 17 versehen, deren Leitung 18 einen Schalter 19 derart aufweist, daß er bei einem ersten Teil der Ankerbewegung geschlossen wird.

Auch hier steht, ohne daß der Schwellwert, zu dessen Bemessung ein Widerstand 20 beiträgt, davon beeinflußt wäre, für den eigentlichen Schließvorgang mehr Energie zur Verfügung als dafür, ihn auszulösen. Statt des in durchgehender Linie gezeichneten Anschlusses der Leitung an den Nebenstromweg 5 wäre auch der gestrichelt gezeichnete Anschluß möglich.

Nach der vorliegenden Erfindung ist nun jeweils im Nebenstromweg 5 eine Diode 21 und im weiteren Stromweg 9 eine Diode 22 angeordnet derart, daß sie nach den die Auslösung (und im vorliegenden Falle zugleich weitgehend bzw. teilweise die übrige Einrichtung zum Schließen der erstgenannten Trennstelle (4) bildenden Organen, d.h. der Spule 12 und dem Widerstand 13 bzw. der Spule 16 und dem Widerstand 20 hin, sperren.

Die Funktion sei im folgenden anhand Fig. 1 erläutert:

Zu betrachten ist der Fall des zunächst vollständig abgeschalteten Schutzschalters einer Phase L₁, der von seiner Ausgangsseite her mit der Spannung einer anderen Phase L₂ beaufschlagt wird, deren Schutzschalter nicht vollständig abgeschaltet hat.

Die dritte Trennstelle 10 ist bei ganz abgeschaltetem Schutzschalter geöffnet und wird beim Wiedereinschalten von Hand geschlossen.

Wären die Dioden 21 und 22 nicht, so wäre auch bei vollständig abgeschaltetem Schutzschalter, d.h. bei geöffneten Trennstellen 4 und 8, und bei geschlossener Trennstelle 10 der weitere Stromweg 9 beaufschlagt, nämlich durch den Kurzschluß mit L₂. Umgehende Wiedereinschaltung wäre die Folge. Die Diode 21 schneidet nun die positive Halbwelle, die Diode 22 schneidet die negative Halbwelle L₂ ab. Damit wirkt sich L₂ nicht aus.

Soll der Schutzschalter wieder eingeschaltet werden durch Schließen der zweiten Trennstelle 8 und zugleich der dritten Trennstelle 10 von Hand, wie es nach der DE-PS 33 16 230 vorgesehen ist, ergeben sich folgende Verhältnisse:

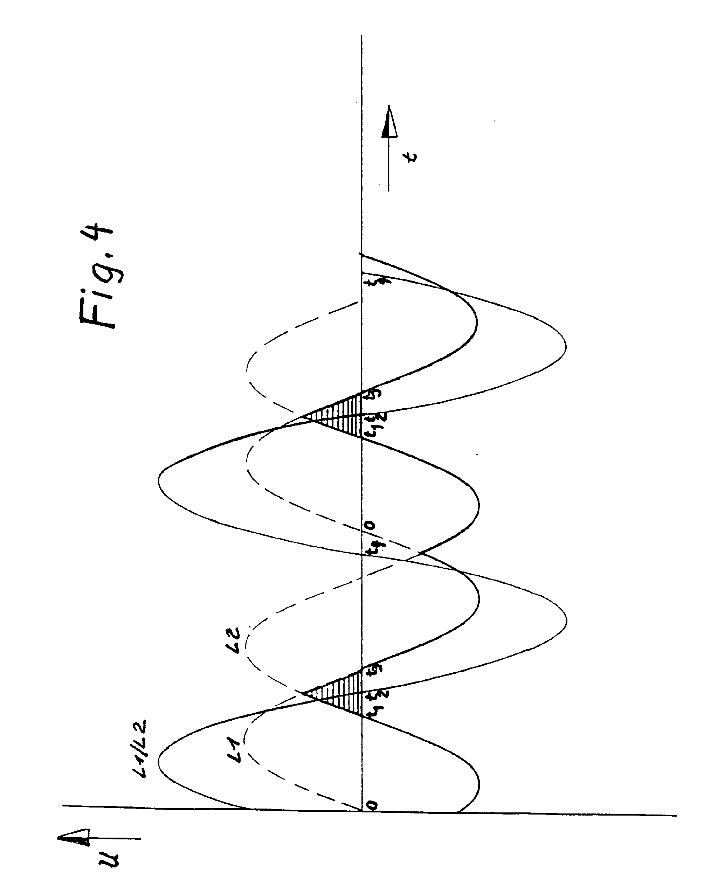

Ohne die Dioden wäre der weitere Stromweg wiederum praktisch mit L₂ beaufschlagt, weil der Widerstand 6 den Stromfluß von L₂ stark drosselt. Mit den Dioden wird, wie an Fig. 4 nachzuvollziehen, der Strom in dem weiteren Stromweg bei Kurzschluß von L₁ mit L₂ stark begrenzt und ohne Kurzschluß nur weniger stark, so daß der Magnetmechanismus 11 derart ausgelegt sein kann, daß seine Schwelle dazwischenliegt, d.h. daß er bei Kurzschluß nicht anspricht, ohne Kurzschluß aber seine Wiedereinschaltfunktion erfüllen kann:

Vom Zeitpunkt 0 bis zum Zeitpunkt t₂ in Fig. 4 ist die Spannung von L₁ größer als die Spannung von L₂, die Spannung U_{L₁/L₂} ist positiv. Der Strom in der daraus sich ergebenden Richtung fließt durch die Diode 21. Bei diesem Zustand herrscht am Punkt A, der Abzweigung des weiteren Stromwegs vom Nebenstromweg 5, infolge der Anordnung des Widerstands 6 praktisch das Potential von L₂. Solange es negativ ist, d.h. bis zum Zeitpunkt t₁, wird ein Stromfluß von N nach A durch die Diode 22 gesperrt. Im positiven Bereich zwischen t₁ und t₂ fließt der aus dem Potential von L₂ sich ergebende Strom. Im Zeitpunkt t₂ hört der Stromfluß von L₁ nach L₂ auf. Das Potential von L₁ sinkt unter das von L₂. Eine entsprechende Stromumkehrung wird durch die Diode 21 verhindert. Am Punkt A herrscht jetzt das Potential von L₁. Daraus ergibt sich ein Strom im Nebenstromweg 9 bis zum Zeitpunkt t₃. Dort wird das Potential L₁ negativ und ein dementsprechender, umgekehrter Strom durch die Diode 22 verhindert. Im Zeitpunkt t₄ wechselt die Stromrichtung im Nebenstromweg 5 und das Potential am Punkt A von L₁ nach L₂. Das Potential bleibt jedoch negativ und damit ein Stromfluß durch die Diode 22 abgeschnitten bis zum nächsten Zeitpunkt t₁. Das jeweils wirksame Potential ist in Fig. 4 in etwas dickerer Linie gezeichnet. Die Bereiche des Stromflusses sind schraffiert. Sie beschränken sich auf das verhältnismäßig kleine Dreieck über dem Zeitraum t₁ bis t₃ einer jeder Welle.

Ist kein Kurzschluß vorhanden, so herrscht nach Schließen der zweiten Trennstelle 8 am Punkt A immer das Potential von L₁, und jede positive Halbwelle von L₁ führt in dem Nebenstromweg 9 zum Strom und kann die Auslösung aktivieren.

Der anschließende Fortlauf des Schließvorganges ist oben schon beschrieben. Für ihn steht das volle Potential von L₁, d.h. auch mit der negativen Halbwelle, zur Verfügung, da die Leitung 14 die Diode 22 überbrückt.

Das Ausführungsbeispiel nach Fig. 2 unterscheidet sich von demjenigen nach Fig. 1 dadurch, daß zu dem Nebenstromweg 5 mit seinem Widerstand 6, seiner Trennstelle 8, der Abzweigung des weiteren Stromwegs 9 und der Diode 21 ein paralleler Nebenstromweg 5′ eingerichtet ist mit einem kleineren Widerstand 6′, einer Trennstelle 8′ und dem in Fig. 1 in dem Nebenstromweg 5 angeordneten langsameren Bewegungsmechanismus (thermischer Auslöser 7). Die Trennstelle 8′ ist mit der Trennstelle 8 derart gekoppelt, daß sie zusammen mit dieser öffnet und schließt. Diese Abwandlung ändert nichts wesentliches an den im vorstehenden betrachteten Potentialverhältnissen. Der Widerstand 6 kann jedoch, bei etwas empfindlicherer Auslösung des Magnetmechanismus 11, etwas größer und die Diode 21 kann, da sie weniger Strom zu führen braucht, billiger sein. Der parallele Nebenstromweg 5′ wird wirksam bei dem Fortgang des Schließvorganges nach dem Schließen des Schaltkontaktes 15, indem dann die negative Halbwelle von L₁ darin fließen kann. Weiterer Vorteil ist die in dem parallelen Nebenstromweg 5′ von der Diode 21 nicht mehr behinderte Anordnung des thermischen Auslösers 7.

Der thermische Auslöser 7 wird hier durch den in beiden Richtungen fließenden Strom aufgeheizt und spricht schneller an.

Das Ausführungsbeispiel nach Fig. 3 entspricht demjenigen nach Fig. 2 mit dem weiter oben schon ausgeführten Unterschied der Überbrückung durch die Leitung 18 statt durch die Leitung 14 einschließlich der davon betroffenen Elemente. In beiden Fällen wird diese aus der DE-OS 34 09 513 bekannte Überbrückung auf die nach der vorliegenden Erfindung vorgesehene Diode 22 ausgedehnt, d.h. diese mit überbrückt. Im Falle der Fig. 3 werden darüber hinaus die Diode 21 und der Widerstand 6 mit überbrückt.

In beiden Ausführungsbeispielen ist die Überbrückung und die damit verbundene Verstärkung der Schließkraft des Magnetmechanismus 11 nach dem Auslösen von besonderem Vorteil für die Verringerung des Stromflusses im Nebenstromweg 5 durch die Einrichtung des parallelen Nebenstromweges 5′.

## Patentansprüche

1. Schutzschalter gegen Überstrom und Kurzschluß, der gegenüber gegebenenfalls nachgeschalteten Schutzeinrichtungen gegen Überstrom und Kurzschluß selektiv ist und der einen Hauptstromweg (1) aufweist, der mittels eines auf Kurzschluß ansprechenden, schnelleren Bewegungsmechanismus' (3) sowie mittels eines auf Überstrom ansprechenden, langsameren Bewegungsmechanismus' (2) trennbar ist, wobei die von dem auf Kurzschluß ansprechenden Bewegungsmechanismus (3) betätigte Trennstelle (4) des Hauptstromweges (1) überbrückt ist durch einen Nebenstromweg (5) mit einem elektrischen Widerstand (6) und einer zweiten Trennstelle (8) in Reihe, die durch den genannten (2) und/oder einen weiteren langsameren Bewegungsmechanismus (7) zu öffnen ist, und eine Einrichtung (9-15;9-11,16-20) zum Schließen der erstgenannten Trennstelle (4) bei Wegfall des Kurzschlusses vor dem Öffnen der zweiten Trennstelle (8) vorgesehen ist, die einen in Energieflußrichtung hinter der zweiten Trennstelle (8) und hinter dem Widerstand (6) von dem Nebenstromweg (5) abzweigenden weiteren Stromweg (9) umfaßt, der zum Nulleiter (N) führt und die Auslösung (9-13;9-11,16,20) der Einrichtung (9-15;9-11,16-20) zum Schließen der erstgenannten Trennstelle (4) bildet, wobei insbesondere ferner die Einrichtung (9-15;9-11;16-20) im übrigen durch einen gleichfalls in dem weiteren Stromweg (9) angeordneten, weiteren schnelleren Bewegungsmechanismus (9-15;9-11,16-20) gebildet ist,
dadurch gekennzeichnet,
daß in dem Nebenstromweg (5) in Energieflußrichtung hinter der Abzweigung des weiteren Stromweges (9) eine in Richtung auf diesen sperrende Diode (21) angeordnet ist und in dem weiteren Stromweg (9) eine von Null her in Richtung auf die die Auslösung bildenden Organe (9-13;9-11,16,20) sperrende Diode (22) angeordnet ist und diese Organe (9-13;9-11,16,20) so ausgelegt sind, daß sie auf den dann bei Kurzschluß des Hauptstromwegs (1) mit einer anderen Phase noch möglichen Stromfluß in dem weiteren Stromweg (9) nicht ansprechen.

2. Schutzschalter nach Anspruch 1, bei dem der genannte weitere schnellere Bewegungsmechanismus (9-15) mit einer bei Überschreiten eines Schwellwertes der Stromstärke einen Anker bewegende Spule (12) und einem in Reihe mit der Spule (12) geschalteten Widerstand (13) sowie einer den Widerstand (13) überbrückenden Leitung (14) versehen ist, die einen Schalter (15) derart aufweist, daß er bei einem ersten Teil der Ankerbewegung geschlossen wird,
dadurch gekennzeichnet,
daß die genannte Leitung (14) die in dem weiteren Stromweg (9) angeordnete Diode (22) mit überbrückt.

3. Schutzschalter nach Anspruch 1, bei dem der genannte weitere schnellere Bewegungsmechanismus (9-11,16-20) mit einer bei Überschreiten eines Schwellwertes der Stromstärke einen Anker bewegenden Spule (16) und einer parallel zu dieser geschalteten, vorzugsweise konzentrisch mit ihr angeordneten, weiteren Spule (17) versehen ist, deren Leitung (18) einen Schalter (19) derart aufweist, daß er bei einem ersten Teil der Ankerbewegung geschlossen wird,
dadurch gekennzeichnet,
daß die genannte Leitung (18) einerseits die in dem genannten weiteren Stromweg (9) angeordnete Diode (22) mit überbrückt und andererseits die in dem Nebenstromweg (5) angeordnete Diode (21), vorzugsweise ferner den in dem Nebenstrom angeordneten Widerstand (6), mit überbrückt.

4. Schutzschalter nach einem der Ansprüche 1 bis 3,
dadurch gekennzeichnet,
daß zu dem Nebenstromweg (5) ein paralleler Nebenstromweg (5′) mit einem kleineren Widerstand (6′) und einer Trennstelle (8′) eingerichtet ist, die vorzugsweise mit der genannten zweiten Trennstelle (8) derart gekoppelt ist, daß sie zusammen mit dieser öffnet und schließt.

5. Schutzschalter nach Anspruch 4,
dadurch gekennzeichnet,
daß der genannte weitere langsamere Bewegungsmechanismus (7) in dem genannten parallelen Nebenstromweg (5′) angeordnet ist.

## Claims

1. Protective circuit breaker for an overload current and short circuit, which is selective with respect to possible downstream protective devices for an overload current and short circuit and has a main current path (1) which can be interrupted by means of a relatively fast movement mechanism (3) responding to a short circuit as well as by means of a relatively slow movement mechanism (2) responding to an overload current, the interrupt point (4) of the main current path (1) which is actuated by the movement mechanism (3) responding to short circuit is bridged by a by-pass path (5) having an electrical resistor (6) and a second interrupt point (8) in series, which latter is to be opened by the said (2) and/or a further relatively slow movement mechanism (7), and a device (9-15; 9-11, 16-20) being provided for closing the first named interrupt point (4) given absence of the short circuit before the opening of the second interrupt point (8), which comprises a further current path (9), which branches off in the energy flow direction downstream of the second interrupt point (8) and downstream of the resistor (6) of the by-pass path (5) and which leads to the neutral conductor (N) and forms the trigger (9-13; 9-11, 16, 20) of the device (9-15; 9-11, 16-20) for closing the first named interrupt point (4), it further being the case, in particular, that the device (9-15; 9-11; 16-20) is formed for the rest by a further relatively fast movement mechanism (9-15; 9-11, 16-20) which is likewise arranged in the further current path (9), characterized in that there is arranged in the by-pass path (5) in the energy flow direction downstream of the branching of the further current path (9) a diode (21) which blocks in the direction towards the latter, and in the further current path (9) a diode (22) which blocks from neutral in the direction towards the elements (9-13; 9-11, 16, 20) forming the trigger, and these elements (9-13; 9-11, 16, 20) are designed in such a way that they do not respond to the current flow in the further current path (9) which is then still possible in the event of a short circuit of the main current path (1) with a different phase.

2. Protective circuit breaker according to Claim 1, in which the said further relatively fast movement mechanism (9-15) is provided with a coil (12), which moves an armature given overshooting of a threshold value of the current intensity, and a resistor (13), which is connected in series with the coil (12), as well as a line (14), which bridges the resistor (13) and has a switch (15) in such a way that it is closed during a first portion of the armature movement, characterized in that the said line (14) also bridges the diode (22) arranged in the further current path (9).

3. Protective circuit breaker according to Claim 1, in which the said further relatively fast movement mechanism (9-11, 16-20) is provided with a coil (16), which moves an armature in the event of overshooting of a threshold value of the current intensity, and a further coil (17), which is connected in parallel with said coil and preferably arranged concentrically with it and whose line (18) has a switch (19) in such a way that it is closed during a first portion of the armature movement, characterized in that the said line (18) on the one hand also bridges the diode (22) arranged in the said further current path (9) and, on the other hand, also bridges the diode (21) arranged in the by-pass path (5) and preferably, furthermore, the resistor (6) arranged in the by-pass.

4. Protective circuit breaker according to one of Claims 1 to 3, characterized in that relative to the bypass path (5) a parallel by-pass path (5′) is set up which has a smaller resistor (6′) and an interrupt point (8′) which is preferably coupled to the said second interrupt point (8) in such a way that it opens and closes together with the latter.

5. Protective circuit breaker according to Claim 4, characterized in that the said further relatively slow movement mechanism (7) is arranged in the said parallel by-pass path (5′).

## Revendications

1. Disjoncteur de proctection pour courant de surcharge et de court-circuit, qui est sélectif pour des installations de proctection pour courant de surcharge et de court-circuit éventuellement agencées en aval et qui comporte une voie de courant principale (1) qui est coupable moyennant un mécanisme mobile (3) assez rapide réagissant à un courant de court-circuit ainsi que moyennant un mécanisme mobile (2) plus lent réagissant à un courant de surcharge, l'endroit de coupure (4) de la voie de courant principale (1) par le mécanisme mobile (3) réagissant à un courant de court-circuit étant ponté par une voie de courant secondaire (5) munie d'une résistance électrique (6) et d'un deuxième point de coupure (8) en série qui est ouvrable par ledit mécanisme (2) et/ou un autre mécanisme mobile assez lent (7), un dispoisitif (9-15; 9-11; 16-20) étant prévu pour la fermeture du premier endroit de coupure (4) en cas de suppression du court-circuit, avant l'ouverture du deuxième point de coupure (8) et comportant une dérivation d'une autre voie de courant (9) de la voie de courant secondaire (5) derrière le deuxième point de coupure (8) la résistance (6), vu dans les sens du flux énergétique, ladite autre voie de courant (9) menant au conduit neutre (N) et constituant le déclenchement (9-13; 9-11, 16, 20) du dispositif (9-15; 9-11, 16-20) pour la fermeture du premier endroit de coupure (4); le dispositif (9-15; 9-11, 16-20) étant par ailleurs encore constitué par un autre mécanisme mobile (9-15; 9-11, 16-20) assez rapide également agencé dans ladite autre voie de courant (9),
caractérisé en ce qu'une diode (21) est agencée dans la voie de courant secondaire (5), derrière la dérivation de ladite autre voie de courant (9), vu dans le sens du flux énergétique, diode qui est polarisée en sens bloquant vers ladite autre voie de courant (9), et
en ce qu'une diode (22) est agencée dans ladite autre voie de courant (9), polarisée dans le sens bloquant en partant du conducteur neutre vers les organes de déclenchement (9-13; 9-11, 16, 20), et
en ce que ces organes (9-13; 9-11, 16, 20) sont conçus de telle sorte qu'ils ne réagissent pas au courant encore possible dans ladite autre voie de courant (9), en cas de court-circuit de la voie de courant principale (1) avec une autre phase.

2. Disjoncteur de protection selon la revendication 1, dans lequel ledite autre mécanisme mobile assez rapide (9-15) est équipé d'une bobine (12) qui déplace un induit, en cas de dépassement d'une intensité de courant de seuil, et d'une résistance (13) montée en série avec la bobine (12), ainsi que d'un conduit (14) qui ponte la résistance (13) et qui comporte un interrupteur (15) qui est fermé par une première partie du déplacement de l'induit,
caractérisé en ce que ledit conduit (14) ponte également la diode (22) agencée dans ladite autre voie de courant (9).

3. Disjoncteur de protection selon la revendication 1, dans lequel ledite autre mécanisme mobile assez rapide (9-11,15, 20) est équipé d'une bobine (16) qui déplace un induit, en cas de dépassement d'une intensité de courant de seuil, et d'une autre bobine (17) agencée en parallèle à la première, de préférence concentriquement par rapport à celle-ci, la conduite (18) de ladite autre bobine (17) comportant un interrupteur (19) fermé par une première partie du déplacement de l'induit,
caractérisé en ce que ladite conduite (18) ponte, d'une part, également la diode (22) agencée dans ladite autre voie de courant (9), et, d'autre part, la diode (21) agencée dans la voie de courant secondaire (5), de préférence encore aussi la résistance (6) agencée dans la voie de courant secondaire.

4. Disjoncteur de protection selon l'une des revendications 1 à 3,
caractérisé en ce qu'une voie de courant secondaire (5′) est agencée en parallèle à la voie de courant secondaire (5) et comporte une résistance (6′) plus petite et un point de coupure (8′) qui est de préférence couplé audit deuxième point de coupure (8) de telle sorte qu'ils s'ouvrent et se ferment ensemble.

5. Disjoncteur de protection selon la revendication 4, caractérisé en ce que ledit autre mécanisme mobile assez lent (7) est agencé dans ladite voie de courant secondaire parallèle (5′).
